# EUROPEAN PATENT SPECIFICATION

(11) **EP 4 556 874 B1**
(45) Date of publication and mention of the grant of the patent: **25.02.2026**
(21) Application number: 24208344.2
(22) Date of filing: 23.10.2024
(51) Int. Cl.: G01M 5/00, B66D 1/00, G01M 99/00, G01N 3/16, G01N 3/20, B65H 51/00, G01N 3/04, G01N 3/08

(54) **TENSILE TEST RIG FOR SUBSEA CABLE PRODUCTS**
ZUGPRÜFSTAND FÜR UNTERWASSERKABELPRODUKTE
BANC D'ESSAI DE TRACTION POUR PRODUITS DE CÂBLE SOUS-MARIN

(30) Priority: 16.11.2023 NO 20231242
(43) Date of publication of application: 21.05.2025
(73) Proprietor: Nexans, 92400 Courbevoie (FR)
(72) Inventor: JORDAL, Lars, 1710 SARPSBORG (NO); NILSEN, Ronny, 1793 TISTEDALEN (NO); KARLSEN, Per Ivar, 1769 HALDEN (NO); HENNIG, Lars, 1788 HALDEN (NO)
(74) Representative: Acapo Onsagers AS

(56) References cited:
- CN-A- 104 155 191
- CN-A- 107 748 109
- CN-A- 110 686 991
- CN-U- 208 283 205

## Description

### Field of the invention

The present invention relates to a tensile test rig for subsea cable products, such as subsea power cables or subsea umbilical cables, as well as to a method of providing tensile testing of subsea cable products.

### Background

It is known to use subsea cable products for purposes such as transmission of information, electrical power and/or fluids. There are many uses for such products in various offshore industries, typically involving laying subsea cable products in challenging subsea locations where surface infrastructure is not possible or is impractical. Subsea umbilicals are used for offshore transfer of fluids, hydraulic power, electrical power, and data, e.g. for connecting subsea equipment and/or offshore facilities in the oil and gas industry. Subsea telecommunications cables are used to transmit telecommunications data across seas/oceans. Subsea power cables are used for subsea electrical transmission between remote offshore installations, e.g. for the oil and gas industry, as well as for power from offshore renewable energy production sites, such as wind farms. Such cables are also used within national grids or for international power connections that join different regions separated by bodies of water. These subsea cable products can be laid over lengths of many kilometres and at depths of several hundred metres. The cables must be able to carry large forces without excessive deformation or failure, including the forces that arise during the cable laying process.

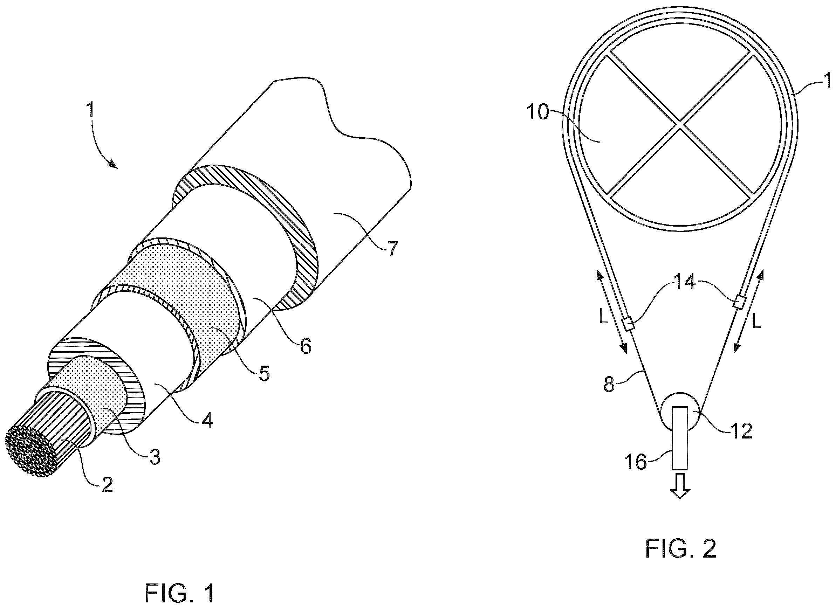

In order to ensure that such cables will perform according to their design parameters then as well as analysis such as computer modelling it is also necessary to perform mechanical tests. As seen in Figure 1 even with a single conductor (i.e. for DC) a typical power cable has a relatively complex layered structure, which means it is not possible to accurately check the performance of these subsea cable products by analysis alone. The behaviour of AC cables with three conductors is more difficult to model, and umbilical cables have an even more complex construction that often includes asymmetry. Testing of cable products, including simulation of real-world loading conditions/forces, is therefore a key part of the design process and also the qualification process.

A typical test regime includes a tensile bending test in which the cable is loaded in tension whilst it is curved around a wheel. Figure 2, which is described below, shows a schematic diagram of this type of a test. The wheel size may correspond to the wheel/bending diameter used for laying the cable from a ship. The forces applied are designed to simulate the forces from the weight of the cable and tension as it is laid, as well as the effect of wave motion and bends both at the seabed and around the main laying wheel of the cable laying vessel. Such testing should be conducted according to routines and requirements published by standards organisations, such as tensile tests for subsea power cables according to Cigré Electra 171 or similar standards such as those set out by ISO or to meet EU or US requirements for testing different types of subsea cable products, i.e. not only power cables but also other cable types including umbilical cables. The mechanical tests are performed on a sample cable before electrical testing is then carried out for the same length of cable, i.e. to establish that adequate electrical properties are present even after the bending/deformation that results from the cable laying process. The applicant has their own fixed tensile bending test rigs located in Halden, Norway and Futtsu, Japan. A similar tensile bending test rig is marketed by Pro Subsea AS of Norway, and this is shown in Figure 2. Given the large size of the wheels/bending diameter and the significant lengths of cable needed, generally 40m or more and often around 80m, then these test facilities must be installed onshore in a location of suitable size, typically at a port/dock. The test installation should also be able to apply large forces, requiring significant structural strength and often substantial foundations.

CN110686991 discloses an indoor device for the testing of reciprocating loading on a subsea towing cable. The device includes a sheave wheel.

CN107748109 is an example of a test rig for performing a tensile bending test for a subsea cable as discussed herein. The test rig includes a sheave wheel that can be disassembled, e.g. to allow for use of wheels of different sizes.

### Summary of the invention

Viewed from a first aspect, the present invention relates to a test rig for a subsea cable product, the test rig comprising:
- a sheave module including a sheave for holding a subsea cable product that is to be tested;
- a load module for applying tension to the subsea cable product on the sheave in order to perform a tensile bending test; and
- an elongate base for placement between the sheave module and the load module, the elongate base being configured to act as a horizontal beam that can hold a compressive load generated by tension in the subsea cable product during the tensile bending test;
   - wherein the sheave can be reversibly divided into parts for transportation in one or more container(s) of smaller cross-section than the diameter of the sheave; and
   - wherein the elongate base can be reversibly divided into parts for transportation in one or more container(s) of smaller length than the whole length of the elongate base.

By allowing for reversible disassembly of the larger elements such as the sheave and the elongate base then the test rig of the first aspect can be a portable test rig that may be transported in the containers and reassembled at a new location. This test rig can be taken to a subsea cable production facility and then assembled there for on-site testing of cables, such as power cables or umbilicals, without the need for a permanent installation of a test rig. The elongate base provides an integrated beam structure for the reactive compression load during the tensile test. This means that there is no need to attach the test rig to the ground. Thus, the test rig may have no fixed foundations and/or may require no attachment to any external structure or anchor. A fully portable test rig provides significant advantages compared to known systems. A single such portable test rig can serve the testing needs of multiple manufacturing locations and can be moved in between locations according to the test/qualification schedule for the subsea cable products of those various locations. The inventors have realised that this can be a more straightforward solution than transporting cable samples, e.g. due to the risk of damage of the samples and the constraints when transporting relatively long cables whilst complying with a restriction on the bend radius during transport.

Advantageously, the test rig may be configured to fully reversibly disassemble into parts each having a maximum dimension shorter than a pre-set length for a transportation container. The disassembled parts may all be sized to fit into the cross-section of the transportation container. Thus, all of the test rig may be able to be divided into parts that will fit into the transportation container. For example, the test rig may be configured to be disassembled and transported using intermodal shipping containers such as 40-foot ISO containers, or a combination of 40-foot ISO containers and 20-foot ISO containers.

The sheave can be reversibly divided into parts for transportation in container(s) of smaller cross-section than the diameter of the sheave. Thus, the parts may be fitted into the container(s) in that a maximum dimension of the cross-section of the container(s), which may be a length, height, or a diagonal thereof for example, will in this case be a smaller dimension than the diameter of the undivided sheave, i.e. the sheave in assembled form.

The maximum length of the disassembled parts, e.g. the divided parts of the sheave and/or of the elongate base, may be 12 m, or optionally 11.9 m. This allows for transportation within the internal length of 40-foot ISO container. The disassembled parts may each fit into a cross-section defined by a rectangle of 2.3 m by 2.5 m, i.e. to fit comfortably within a high cube ISO container, or to fit within a cross-section defined by a rectangle of 2.3 m by 2.35 m, as is available with a standard height ISO shipping container. It will be appreciated that if required then larger widths of flat parts can be accommodated by placing them diagonally in the container.

In order to permit transport within typical infrastructure, e.g. via road, rail, shipping or air transit, then there is also a maximum weight for the transport containers that carry the separated parts of the disassembled test rig, as well for each individual part. The maximum weight for parts in a single transport container may be 25 ton, so that the test rig should be separable into parts that can be divided into groups of <25 ton that fit in the smallest possible number of shipping containers. The individual parts may be able to be lifted by a heavy-duty forklift as is typically used in ports and docks. Thus, for example, the maximum weight of individual disassembled parts may be limited to 14 ton or more preferably 11 ton. In some example embodiments the heaviest part is the load module, which may weigh less than 11 ton, such as a weight of about 10 ton.

The elongate base carries a compressive load between the sheave and the load module when the test rig is in use. The compressive load bearing capacity of the elongate base may thus be equivalent to the maximum load that the load module can apply. This is equivalent to twice the tensile test load force. The maximum load may be 100 ton or more, optionally 150 ton or more, for example it may be about 200 ton (or more), i.e. 100 ton in tension in each part of the subsea cable product. Thus, the elongate base may be designed to carry a compression load of ≥100 ton, ≥150 ton, or ≥200 ton.

The sheave may comprise a wheel, such as a wheel of 6 m or 10 m diameter, as is used in known test rigs. The subsea cable product can be bent around the wheel during the tensile bending test, as is the case with known test rigs. The sheave can be reversibly divided into parts and it may hence comprise a wheel that can be disassembled into segments and/or sectors in order to fit into the container.

The sheave may be configured to provide two sizes of wheel, e.g. both of a 6 m wheel and a 10 m wheel. Thus, the sheave may comprise an inner sheave wheel of smaller diameter and a sheave wheel extension that can combine with the inner sheave wheel to provide a wheel of larger diameter. By using a sheave wheel extension to build a larger wheel onto a smaller wheel then the portable test rig can conduct a greater range of tests with a smaller weight of disassembled parts compared to the use of two different wheels.

The sheave wheel(s), or one of the sheave wheels, may be reversibly divided into parts by removal of segments of the wheel(s). For example, there may be two (or more) side segments that are removably attached to a centre segment in order to form a full wheel. Alternatively, or additionally in the case of a sheave providing two sizes of wheel, the wheel may be reversibly divided into parts by splitting it into sectors each of which includes a partial circumference of the full wheel. In the case of a sheave providing two sizes of wheel via a sheave wheel extension then in one example the inner sheave wheel divides into segments, whilst the sheave wheel extension is formed by multiple wheel extension sectors, each wheel extension sector having a partial circumference of the full (extended size) sheave. The disassembled parts can be dimensioned to fit into an ISO container as discussed above, e.g. with a maximum radial dimension of 2.5 m or less.

The parts of the wheel(s) may be joined using reusable fixings such as bolts, with fixing locations selected to avoid shear forces on the bolts, e.g. placed to be aligned with a radial direction of the wheel. Where a wheel splits into segments of a circle then the parts may be joined via mounting plates placed along the chords of the circle that define the segments.

The elongate base may have a maximum assembled length of more than 50 m, optionally more than 60 m. The test rig as a whole may have a maximum assembled length of more than 80 m, optionally more than 90 m. The assembled length of the test rig includes the length of the elongate base as well as the length of the sheave module and the load module at the ends of the elongate base. The elongate base can be reversibly divided into sections along its length, such as by splitting it into sections of less than 12 m or less than 11.9 m, e.g. about 11.8 m, in order to allow the parts to fit into a 40-foot ISO container. This also allows for the test rig to be assembled with a varying length, by not including all sections of the elongate base. The sections of the base may be assembled together via reusable fixings such as bolts.

The elongate base may comprise an upper load bearing structure and a lower load bearing structure, e.g. upper and lower beams. The upper load bearing structure may be formed by a number of upper base sections and the lower load bearing structure may be formed by a number of lower base sections. There may for example be two or more of each of the upper base sections and the lower base sections, optionally three or more, for example there may be five or six of each. The test rig may be arranged so that during use the location of the subsea cable product is aligned with a shear centre of the base, e.g. in a vertical location part way up the height of the base, and aligned with the shear centre, in order to ensure that the base is loaded in compression without any bending or twisting load and with minimised risk of buckling. Thus, the tensile forces in the cable act at a location that is aligned, e.g. vertically aligned, with the compressive forces in the elongate base. In the case of a structurally symmetrical base, e.g. with the same stiffness and strength for both of the upper load bearing structure and the lower load bearing structure, then the cable may be aligned with the halfway point on the height of the base. This may be done by suitably locating the sheave and the block. The elongate base may be made with any height, but it is beneficial to keep the height relatively small so that the disassembled test rig may more easily be moved into containers for transport. The height, when assembled, may be 2 m or less, optionally 1.5 m or less. In some cases, the height and/or form of the disassembled parts may be set to allow for two or more to be stacked (optionally nested) within the container height, e.g. within a height of 2.5 m or 2.35 m for ISO containers.

The lower base sections may comprise one or more beam element(s) along with cross bracing. For example, there may be two similar side beams, e.g. two I-beams or box beams. The upper base sections may have a similar form to the lower base sections or alternatively may be provide by one or more rail(s) supported above the lower base sections by posts, in which case there may be no cross bracing for the upper base sections. A single rail would form an elongate base having an inverted T in cross-section. A pair of rails would form a U in cross-section and advantageously such rails can be provided by beams of similar form to the side beams of the lower base sections, thereby creating a structurally symmetrical cross-section for the elongate base. The width of the elongate base, and the widths of the sections that form the elongate base, should fit into the container width, e.g. a width of less than 2.3 m to fit into the internal width of an ISO container.

The upper base sections and the lower base sections may be offset from one another along the length of the elongate base. This means that the joints between adjacent upper base sections are not at the same place along the length of the base as the joints between adjacent lower base sections. The upper base sections and the lower base sections may be joined to adjacent similar sections, or at the ends to the load module and sheave module, by fixings extending along the longitudinal direction of the elongate base. The upper base sections and the lower base sections may be configured to abut longitudinally adjacent sections to transfer compressive loads without applying force to the fixings.

The fixings between the upper base sections and the lower base sections may be the same for each of the sections. Thus, for example, each of the upper base sections may have similar end fittings to the other upper base sections and each of the lower base sections may have similar end fittings to the other lower base sections. This allows the sections to be joined in any order as well as permitting a different number of sections to be included. There may be first and second end fittings, e.g. male and female end fittings, in each case, or the fixings may be identical at each end so that the upper base sections and the lower base sections do not need to be installed in any specific orientation. By including a different number of the base sections it is possible to vary the overall length of the assembled test rig by changing the length of the elongate base. Thus, for example, the number of upper base sections and lower base sections that are included when assembling the test rig could be reduced for testing smaller cables or for use in a constrained space.

One or more brace connector may be included at the transition between the elongate base and the sheave module. This may for example aid in transfer of forces from the upper load bearing structure of the base to the load bearing parts of the sheave module, which may be at a lower part thereof.

The load module is configured to apply a tension force to the subsea cable product when it is bent around the sheave. The load module may use a hydraulic cylinder to generate displacement and to generate the tension force. The displacement may be up to 2.5 m and the tension force can require a load of >100 tons, >150 tons or >200 tons as discussed above. A block may be mounted on the load module for pulling a winch cable attached to the subsea cable product that is being tested. The winch cable may for example be a steel cable. The block may comprise a block wheel or multiple block wheels.

In some examples there is a single block wheel having a diameter of 2.5m or less in order that it fits within an intermodal container, such as an ISO container, in a single piece. In another example the block comprises two block wheels, e.g. 1.5 m diameter, which can be mounted spaced apart from one another so that the distance between the outer edges of the two block wheels is larger than 2.5 m, e.g. 3 m or more. This allows for a greater distance between the winch cable and the sides of the load module and base, which creates more space for wagons, but does not require a block wheel that is too large for an ISO container.

The block wheel(s) may be actuated in order to drive movement of the subsea cable product about the sheave. For example, the block wheel(s) may be motorised, such as by the use of a hydraulic motor.

The various structural parts of the test rig may be formed of any suitable material, i.e. a material able to carry the required loads in tension and/or compression. Steel may be used. Thus, the upper base sections and the lower base sections may be formed of steel, the sheave may be formed of steel, and so on. Steel can provide the required strength as well as being able to comply with the weight limit for the disassembled parts.

The power cables may be medium voltage of high voltage power cables, e.g. cables rated at 1 kV and above. In some examples they are HVDC or HVAC cables for subsea applications. Where the power cable is a high voltage cable then it may be a cable for carrying electrical power at voltages of more than 30 kV, especially at more than 300 kV, for example up to 800 kV. The power cables may for example have conductors with a diameter in the range 25mm to 70mm and an overall diameter of at least 15mm larger than the conductor diameter, typically at least 20mm larger. The overall diameter may be in the range 40mm to 150mm. This overall diameter may include the conductor and the insulation sheath layers as well as optionally armour layer(s) and/or an outer protective cladding layer.

Viewed from a second aspect, the present invention relates to a kit of parts that, when assembled, will provide the test rig of the first aspect. The kit may comprise at least the sheave module, the load module, and the elongate base. The kit may also comprise a plurality of transport container(s), which may be sized as set out above. The kit may optionally comprise any of the additional features set forth above such as one or more of: the inner sheave wheel, the sheave wheel extension, the upper base sections, the lower base sections, the block wheel(s) and/or brace connectors. The inner sheave wheel may be provided in the form of a centre segment and detachable side segments. The sheave wheel extension may be provided in the form of a set of wheel extension sectors.

Viewed from a third aspect, the present invention relates to a method of providing testing for subsea cable products, the method comprising: using a test rig as described above in connection with first aspect to apply tension to a subsea cable product. This may be done during a tensile bending test. This method may include movement of the subsea cable product about the sheave whilst tension is being applied. The method may perform a tensile bending test, such as a tensile bending test as required for qualification of a subsea cable product. Alternatively, the test rig can be used for tension tests without bending. In that case the subsea cable product to be tested may be mounted in a straight line between the load module and the sheave module.

The method may involve the use of a test rig incorporating any of the other optional features as set out above in relation to the first aspect and/or the second aspect.

The method may comprise receiving the test rig as a kit of parts, e.g. as in the second aspect, and assembling the test rig before performing the test. The test rig may be transported to a test site in containers, e.g. in intermodal shipping containers such as ISO containers, before it is unloaded and assembled.

The method may comprise, after performing the test, disassembling the test rig. The disassembled test rig may be loaded into containers, e.g. in intermodal shipping containers such as ISO containers, and then optionally transported to another location.

The method may include use of a test rig with two wheel sizes as set out above and switching the wheel sizes according to the test requirements. This may be done by assembly or disassembly of a sheave wheel extension. The test requirements can relate to the intended diameter for a laying wheel of the cable laying vessel that the subsea cable product is intended for.

### Short description of the drawings

In the following description certain embodiments of this invention will be further explained by way of examples shown in the drawings:
Figure 1 shows a layered structure of a typical subsea power cable;
Figure 2 is a schematic diagram showing the forces applied during a tensile bending test of a subsea cable product;
Figure 3 shows a known test rig for carrying out the tensile bending test;
Figure 4 is a plan view of a portable test rig;
Figure 5 shows the portable test rig of Figure 4 in a side elevation view;
Figure 6 is a plan view of a sheave module of the portable test rig with wheel extensions removed;
Figure 7 includes a plan view and a side elevation view of a sheave module in a dissembled configuration;
Figure 8 shows disassembled side parts of a centre wheel for the sheave wheel section;
Figure 9 includes orthogonal views of a wheel extension part for the sheave wheel section;
Figure 10 shows side and plan views for a brace connector;
Figure 11 shows a plan view and side elevation view of a lower base section;
Figure 12 shows a plan view and side elevation view of an upper base section;
Figure 13 shows a variation of a hydraulic cylinder module in a plan view and a side elevation; and
Figure 14 shows a plan view and a side elevation view of another hydraulic cylinder module.

### Detailed description of example embodiments

Often, it is desirable to transmit power via subsea power cables extending over long distances or to allow for transfer of fluids, data and/or power via subsea umbilical cables. Such subsea cable products (i.e. including cables and umbilicals) are subject to significant stresses during installation and whilst in use and therefore they need to be tested in various ways, both as a part of the design process and also to satisfy qualification requirements. This test regime includes a tensile bending test, where the subsea cable product is bent to a required diameter and subject to tensile forces via tension at each end either side of the bend.

As shown in Figure 1, a subsea cable product 1 in the form of an electric power cable 1 comprises an elongated electrical conductor 2, typically copper or aluminium, surrounded by a plurality of insulating/protective layers. These layers are positioned successively and coaxially around the conductor 2, and in this example they include: a first semiconducting layer 3 referred to as "inner semiconducting layer" or ISC, an electrically insulating layer 4 referenced as INS, a second semiconducting layer 5 referred to as "outer semiconducting layer" or OCS. Single phase cables comprise one conductor 2 as shown. Multiphase cables will have multiple conductors 2 and therefore a more complex shape. Umbilical cables can include conductors 2 as well as flow paths for fluids and/or added conductors for communication of data.

The insulation layer 4 is located between the semiconducting layers 3, 5. Normally, the conductor 2 has a generally circular cross section. The surrounding insulation 4 and semi-conducting layers 3, 5 usually have a cross-section with a similar shape to the conductor 2, i.e. normally being generally circular. The first semiconducting layer 3, the insulation layer 4 and the second semiconducting layer 5 are often referred to as an insulation system, or an insulation sheath. These power cables 1 are typically produced by triple extrusion placing the insulation sheath 3, 4, 5 directly onto the conductor 2. Added layers may also be present such as layers for adding mechanical strength and for protecting the cable against physical damage as well as chemical damage, e.g. corrosion. In this case there is an earthing and/or protective metal shield 6 and an external protective cladding 7.

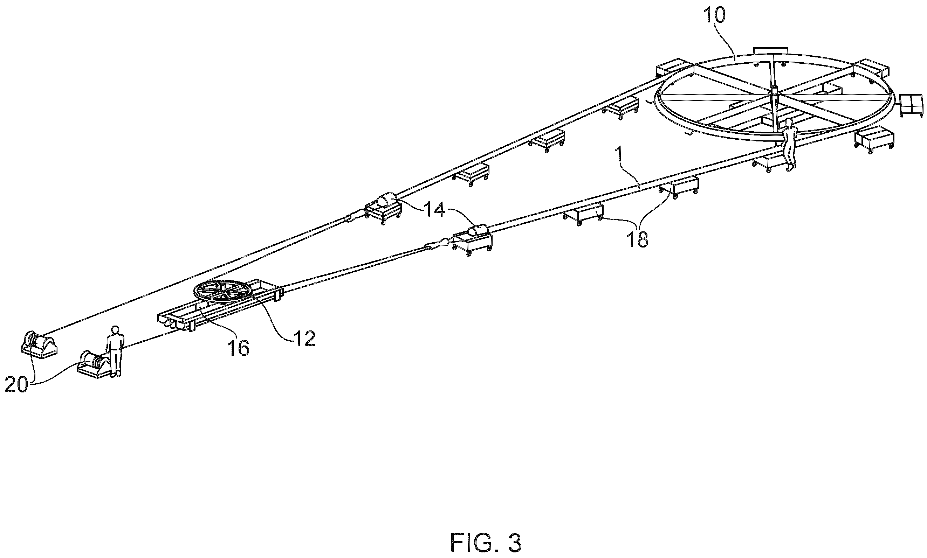

In this document the term cable, or cable product 1, is used to denote any cable to be tested by the test rig. This encompasses power cables as well as umbilical cables and any other form of subsea cable, such as telecommunications cables. The multilayer construction of these cable products 1, including the more complex forms for multiphase power cables or umbilical cables, create challenges in relation to carrying tension in bending. To be sure that the subsea cable product 1 will perform as expected during installation and use then they undergo a tensile bending test as depicted in Figure 2 and Figure 3. The tensile bending test demonstrates the cable product's ability to carry tension in combination with deformation in bending over the laying wheel of a cable-laying vessel during installation. The test cable 1 is attached to a winch cable 8 and laid halfway around a large sheave 10, which can be of similar size to the laying wheel (e.g. 6 m or 10 m diameter). A block 12, which may be a part of a winch device, is attached to the cable ends via the winch cable 8 and pulling eyes 14. Via the block 12 and a hydraulic cylinder 16 a tensile force is applied. This may be done while the sample length of the subsea cable product 1 is moved back and forth over the sheave 10, e.g. three times back and forth.

Figure 3 shows a real-world example of such a test rig, with the cable length and diameter of the sheave 10 shown to scale. As well as the main parts shown in

Figure 2 the test rig of Figure 3 also includes wagons 18 that are used to support the cable 1 and the pulling eyes 14 along with winch drums 20 of a winch system that also includes the winch cable 8 and the block 12. The winch system can be used to pre-tension the test rig as well as for aiding movement of the sample cable 1 back and forth around the sheave 10, although this is not essential since the same effect can be achieved via an actuated block 12 or actuated sheave 10, for example via a hydraulic motor that can turn the block 12 or sheave 10.

The load/tensile force during the tensile bending test can vary depending on the subsea cable product 1 as well as the intended installation location. The cable weight and the water depth at the installation location both have a significant impact on the size of the tension forces that might be experienced during installation.

It is known for subsea cable production facilities to have a dedicated tensile test rig on site of a similar form to the test rig of Figure 3. **In** that case cable products 1 requiring testing are transported only a short distance from the factory to the test rig. However, many production facilities do not have their own test rig and it is not efficient to build a test rig for each production site, especially considering that it may only need to be used from one to three times per year. Therefore, it is commonplace in the prior art to transport sample cables 1 from the production facility to another site with a suitable test rig. This results in significant added cost for transport as well as time delays in completing qualification tests for the cable products 1. In addition, with this type of prior art testing routine there are challenges in transport of test samples due to a need to move a large length of cable (often 80 m) with restrictions on bending radius and a need for careful handling to avoid any risk of damage to the test sample.

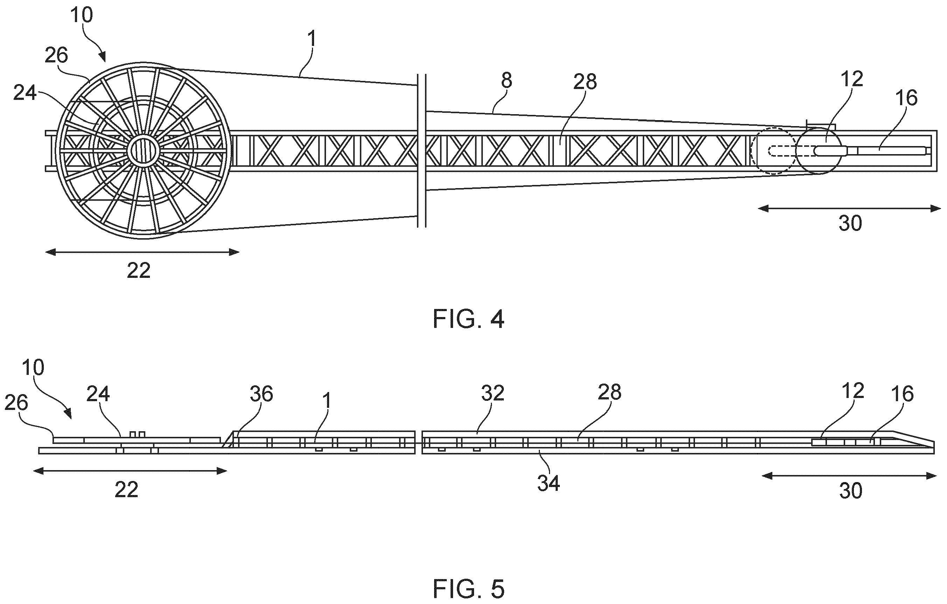

These issues are avoided by the use of a portable test rig, which may for example be as shown in Figures 4 to 14. When it is assembled portable test rig can perform similar testing operations to the known fixed test rigs, i.e. tensile bend testing in accordance with the relevant standards such as Cigré Electra 171 for power cables, or similar standards for umbilical cables. The test rig is also able to be disassembled to provide a transportation configuration in which all of the parts can be packed into a set of standardised intermodal shipping containers (ISO container), e.g. containers as defined by International Organization for Standardization (ISO) standard 668:2020. These containers are typically 8 feet (2.44 m) wide, either 20 or 40 feet (6.10 or 12.19 m) long and 8 feet 6 inches (2.59 m) high. The portable test rig can be disassembled into parts that will all fit into a 40-foot intermodal container, with the option for transport of smaller parts in 20-foot containers. With this portable test rig, it can be possible for multiple production facilities to be served by a single test rig, which can increase efficiency and avoid delays, as well as avoiding the challenges of transportation of sample cables.

As seen in Figures 4 and 5 the assembled portable test rig includes a sheave module 22 that comprises an inner sheave wheel 24 encircled by a sheave wheel extension 26. The inner sheave wheel 24, optionally with the sheave wheel extension 26, acts as the sheave 10 of the mechanism shown in Figure 2. In this example the sheave wheel extension 26 creates a wheel with a diameter of 10 m and the inner sheave wheel 24 has a diameter of 6 m. The sheave module 22 is connected to one end of an elongate base 28 that takes the form of a horizontal beam structure. The other end of the base 28 is connected to a load module 30, which in this case is a hydraulic cylinder module with a hydraulic cylinder 16 for applying tension to the cable 1 being tested. This is done via a block 12 as in the mechanism of Figure 2.

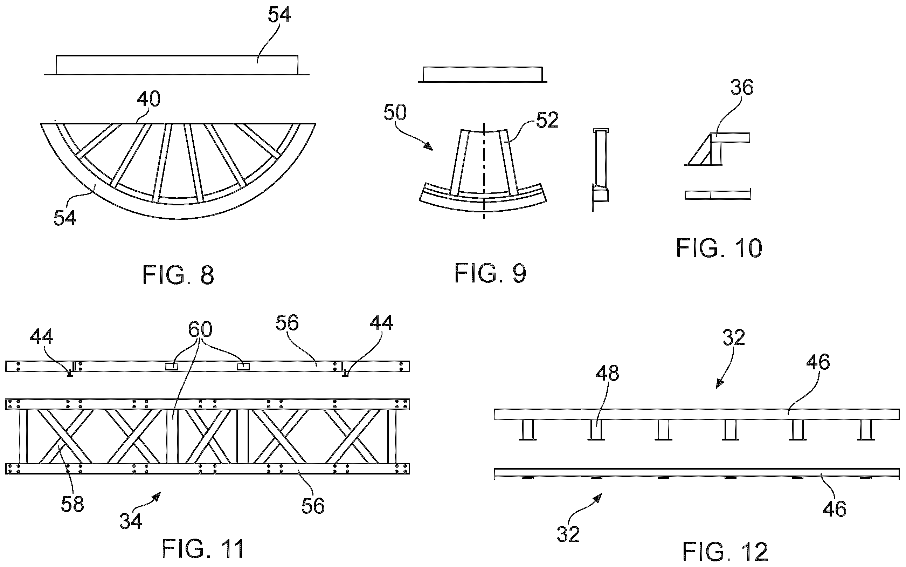

Both of Figures 4 and 5 omit a centre part of the elongate base 28 to allow the end parts to be enlarged. It will be appreciated that the centre part of the base 28 will have a similar form to the remainder of the base 28. In Figure 5, which shows the test rig of Figure 4 in a side elevation, more detail of the base 28 can be seen, in particular the upper base sections 32 and lower base sections 34. The elongate base 28 divides into several pieces lengthwise allowing for transport in a standard length shipping container. Each piece has an upper base section 32, as shown in Figure 10, and a lower base section 34, which is seen in more detail in Figure 11. The pieces of the upper base section 32 and lower base section 34 are offset from one another in the longitudinal direction of the base 28, so that the joins between adjacent lower base sections 34 are at different points along the longitudinal direction than the joins between adjacent upper base sections 32.

In the omitted centre part of Figures 4 and 5 there will also be a connection point between the subsea cable product 1 that is being tested and a winch cable 8 that fits around the block 12. These connection points may take any suitable form, e.g. as used in prior art fixed test rigs.

The sheave 10 and block 12 are located at a midpoint of the height of the base 28 so that when the test rig is in use the vertical location of the cable 1 is aligned with the vertical location of the shear centre of the cross-section for the base 28. This may for example be halfway up the height of the base 28 if the upper base section 32 and lower base section 34 have the same stiffness in compression. As the elongate base 28 extends along a line between the centre of the sheave 10 and the centre of the block 12 then the two parts of the cable 1 at either side will be symmetrically located. There will be compressive forces in the base 28 that are produced by loading the cable 1 in tension. Having a symmetrical form for the base 28, along with correct vertical placement of the cable 1 at the same height as the shear centre of the base, means that these compressive forces will act in alignment with the shear centre, minimising the risk of twisting, bending or buckling of the base 28 when the test rig is in use.

The elongate base 28 is joined to the sheave module 22 via a pair of brace connectors 36, as seen in Figure 5. A lower part of the sheave module 22 has a similar form to the lower base section 34. The upper base section 32 cannot easily extend into the sheave module 22 as it would obstruct the sheave 10 and cable 1, so the brace connectors 36, one at each transverse side of the base 28, provide a transition including transfer of loads from the upper base section 32 to the lower part of the sheave module 22. The brace connectors 36 include an offset between an upper rail part, which joins to the upper base section 32, and a lower mounting part, which mounts to the lower base section 34 and/or to the base of the sheave module 22. This offset, which is along the longitudinal direction of the elongate base 28, is similar to the offset between the upper base section 32 and lower base section 34.

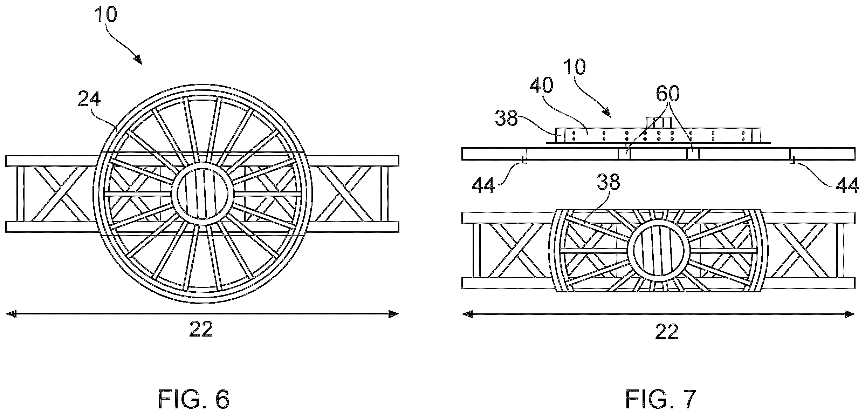

The portable test rig of Figures 4 and 5 is able to be divided into parts for transport and these different parts are now discussed in further detail with reference to Figures 6 to 14. The structural parts can be made of steel, for example.

As noted above the sheave 10 is formed by an inner sheave wheel 24 that can be surrounded by extension parts to form a sheave wheel extension 26, which takes the form of a larger sheave wheel. Figure 6 shows a sheave module 22 detached from the base 28, with the sheave wheel extension 26 removed so that the sheave 10 is provided only by the inner sheave wheel 24. The length of the sheave module 22 is selected so that it fits into the desired transport container, in this case a 40-foot **ISO** container. The length may for example be 11.8 m to fit into the internal space of the container with suitable clearance. The inner sheave wheel 24 typically has a 6 m diameter and this is designed for disassembly in order that it fits into the width/height of the transport container, e.g. based on a cross section of no more than 2.2 m by 2.5 m to allow for clearance within a standard ISO container.

Figure 7 shows a plan view and a side view of the sheave module 22 after further disassembly, with only a centre segment 38 of the inner sheave wheel 24 left attached, which reduces the width sufficiently that it can be easily placed into the container. Figure 8 shows a side segment 54 of the inner sheave wheel 24. Two such side segments 54 are included and when fitted to the centre segment 38 the form the complete inner sheave wheel 24. As seen in Figures 7 and 8 the segments 38, 54 each include chord plates 40, which are mounting plates spanning a chord along the line where the side segment 54 is joined to and detached from the centre segment 38. The assembled sheave module 22 of Figure 6 can be obtained by connecting two side segments 54 as in Figure 8 with one centre segment 38 on a base part as in Figure 7. There is a chord plate 40 on each of the segments 38, 54 and they can be joined together by abutting the chord plates 40 and joining them with suitable fixings, e.g. bolts.

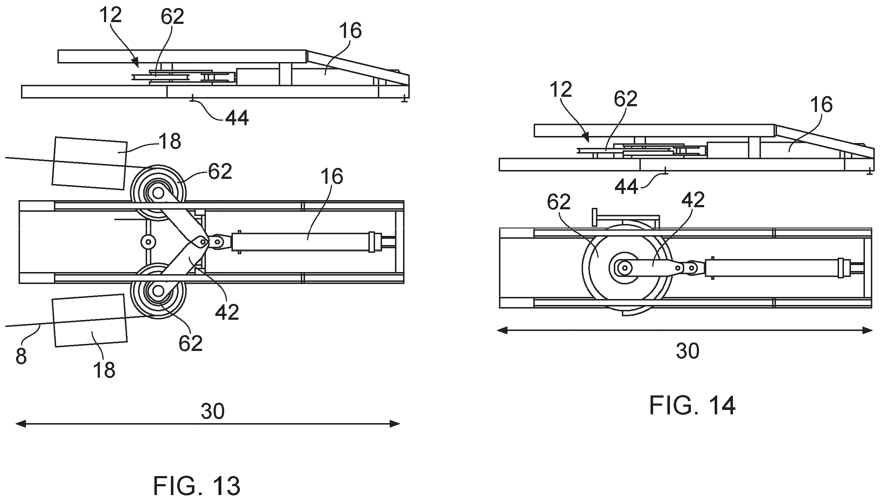

Also visible in Figure 7, in the side view, are adjustable feet 44 along with lift pockets 60. The adjustable feet 44 are provided at various points along the bottom of the test rig, such as at the sheave module 22 and at the load module 30 (as seen in Figure 13. They can be vertically adjusted, e.g. via a threaded connection, to provide a suitable support on the ground beneath the test rig even if the ground is not totally flat. The lift pockets 60 are located at the centre of the module 22 and they allow for lifting and transportation via a forklift.

Figure 9 shows a wheel extension sector 50, which is one of the extension parts used to form the sheave wheel extension 26. In this example the sheave wheel extension 26 is provided by an assembly of nine such wheel extension sectors 50 with the inner sheave wheel 24. The extension sectors 50 include extension spokes 52 and a section of the circumference of the wheel. They may be joined to the inner sheave wheel 24 by fixings at the ends of the extension spokes, e.g. via bolts, and they may join to each other using fixings at the abutting parts of the circumference sections. The wheel extension sectors 50 are sized to fit within the height and length of an ISO container. Thus, in the radial direction of the wheel extension sectors 50 the maximum dimension may be less than the height of the container, e.g. less than 2.5 m. In this example the radial dimension is about 2.3 m. The largest dimension of this part is the length along the tangent to the circumference section, and this can be placed lengthwise in the container, including in a 20-foot container if required. That length may be less than 4 m and in this case it is about 3.6 m.

The elongate base 28 is made up of the upper base sections 32 and the lower base sections 34. As seen in Figures 4 and 5 these join at one end to the sheave module 22 via brace connectors 36. At the other end they join to the load module 30. As noted above the brace connectors 36 include an offset, in this case where the upper base sections 32 are spaced further from the sheave 10 than the lower base sections 34. The load module 30 has a corresponding offset allowing for the upper base section 32 to overlap with the load module 30 whilst the lower base section 34 does not overlap.

Figures 10, 11 and 12 show a brace connector 36, a lower base section 34, and an upper base section 32. In this example there are six lower base sections 34, each of a length selected to fit into the transport container, which is a length of 11.8 m in this case. There are two brace connectors 36 and six pairs of upper base sections 32, i.e. a total of twelve upper base sections 32. The upper base sections 32 have a length of 11.8 m. The sheave module 22 and the load module 30 also have a generally similar length (in this case 11.8 m and 10.5 m respectively) and so the total length of the assembled test rig is over 90 m.

The lower base sections 34, shown in Figure 11, include two side beams 56 and cross braces 58 connecting the beams 56. The side beams 56 provide the main structural strength of the lower base sections 34, which together with the upper base sections 32 must carry a significant compressive force during the tensile bending test. These side beams 56 may for example be I-beams or box beams. The lower base sections 34 also include lift pockets 60 allowing for transport via a forklift.

The upper base sections 32, as shown in Figure 12, are in this case provided in pairs with one on each of the left and right of the base for each piece of the length. The upper base sections 32 comprise a rail 46 supported on posts 48. The rail 46 may take the form of an I-beam or a box beam similar to the two side beams 56 of the lower base sections 34. The posts 48 can be connected at their lower ends to fixing points on the two side beams 56 of the lower base section 34. Thus, for each lower base section 34 there will be a left upper base section 32 and a right upper base section 32, and the base 28 as a whole may include four beams (the two side beams 56 and the two rails 46) that together hold the compressive load that is generated during the tensile bending test. The four beams can be symmetrically arranged thus giving the base 28 a shear centre at the middle of the cross-section. The sheave 10 and block 12 should then be aligned with this shear centre so that the compressive force due to tension in the cable 1 passes through the shear centre.

The block 12 is fixed to the load module 30. Figures 13 and 14 show two different variations for the load module 30. Both of them include a hydraulic cylinder 16 for displacement of the block 12 and for generating a tensile force in the cable 1 via the winch cable 8 that is wrapped around the wheel(s) of the block 12. The block 12 is movable along the longitudinal direction of the test right (i.e. toward and away from the sheave 10) via the hydraulic cylinder 16 and the displacement of the block 12 can be up to 2.5 m. The hydraulic cylinder 16 is configured to produce forces as required by the applicable test specifications, and in the same way as the forces used in fixed test rigs. The required loading during testing can vary depending on the nature of the subsea cable product 1 and on the installation site, e.g. depth of water. In order to be able to perform a full range of testing then the load module 30 can be configured to apply loads of up to 200 ton, giving a cable tension of 100 ton. In each case the hydraulic cylinder 16 is coupled to the block 12 via a block wheel bracket 42.

In the example of Figure 13 the block 12 comprises two block wheels 62 and the block wheel bracket 42 has a Y shape. The two block wheels 62 may for example have a diameter of 1.5 m. By using two wheels in this way it is possible to space the winch cable 8 further from the sides of the test rig, giving more space for wagons 18, as shown, whilst avoiding needing a block wheel with a diameter that is too large for it to fit in one piece into the shipping container. The two block wheels 62 should be removed from the load module 30 of Figure 13 before it can be transported, as the overall width with the block wheels 62 in place will be too large for the size of the ISO shipping container.

In the alternative arrangement of Figure 14, which also corresponds to the load module 30 of Figures 4 and 5, there is a single block wheel 62 of a larger diameter, which can be set based on the maximum dimension of the cross-section of the shipping container, e.g. a diameter of 2.5 m. This means that this design for the load module 30 can be transported with the block wheel 62 kept in place.

In each case the load module 30 may have a length less than the size of a 40-foot shipping container, e.g. a length of 11.8 m as for the other elongate parts, or in this case a shorter length of about 10.5 m can be used. It can be lifted via a forklift inserted in between the top and bottom parts, so there are no added lift pockets although lift pockets could optionally be included.

The portable test rig is designed to be reversibly assembled/disassembled without the need for complex equipment or heavy lifting beyond the use of a forklift and/or other load handling equipment of the type that is typically used to move ISO shipping containers. The fixings can be attached by hand tools, so that it becomes possible to assemble or disassemble the test rig without complex equipment. With the proposed design this can be done by two people and a forklift, although the assembly time may be reduced if more people are present.

The disassembled test rig can be stored and transported in a number of ISO shipping containers. It can thus be easily transported between test locations via ship or road, using standard transport devices. When it is desired to assemble the test rig then a suitable test site should be identified and the parts unloaded from the shipping containers, such as by use of a forklift. The load module 30 should be placed at a first end of the test site and, if necessary, the block should be assembled, such as by fitting the block wheel(s) 62. Then, the six lower base sections 34 and the six pairs of upper base sections 32 should be fixed in sequence to the load module 30 and to one another in order to form the elongate base 28. **In** some cases the test rig can be assembled without using all six of the lower base sections 34 and upper base sections 32, which may be done for smaller cable tests and/or to fit within a constrained space. The six lower base sections 34 and the six pairs of upper base sections 32 can each have the same fittings giving a modular arrangement. This means that they can be joined in any sequence and the length of the elongate base 28 can be varied by using any number of sections from one up to six.

The base sections 32, 34 can be connected end to end with the upper base sections 32 joined via the posts 48 to the side beams 56 of the lower base sections 34. The sheave module 22 can then be located after the final base sections 32, 34 and at the other end of the test site. The base of the sheave module 22 should be attached to the last lower base section 34 and the last pair of upper base sections 32 via the two brace connectors 36. Then the inner sheave wheel 24 can be assembled by coupling the two side segments 54 to the centre segment 38. At this point the test rig could be used, i.e. for tests requiring the smaller (e.g. 6 m) wheel size. If needed then the sheave wheel extension 26 can be assembled by joining the nine wheel extension sectors 50 around the inner sheave wheel 24, when then provides for tensile bend testing using the larger (e.g. 10 m) wheel size.

The test rig can perform tensile bending tests of subsea cable products 1 such as power cables or umbilical cables. It can also be used for tension tests where the subsea cable product 1 is mounted in a straight line between the load module 30 and the sheave module 22.

When the testing is completed then the test rig can be dismantled by reversal of these steps and packing the separated parts back into their shipping containers. It should also be appreciated that the sequence of steps for assembly can be varied, e.g. the base sections 32, 34 could be put together starting from the sheave module 22 rather than starting from the load module 30. Optionally a protective safety enclosure may be provided for encircling the test rig during use. This can provide protection to users and nearby objects/structures in case of a failure of the subsea cable product 1 or the winch cable 8, or any other failure that might cause damage to the surrounding area.

### List of reference numbers:

1 Subsea cable product/power cable
2 Electrical conductor
3 Inner semiconducting layer
4 Electrical insulating layer
5 Outer semiconducting layer
6 Metal shield
7 Protective cladding
8 Winch cable
10 Sheave
12 Block
14 Hydraulic cylinder
16 Pulling eye
18 Wagon
20 Winch drums
22 Sheave module
24 Inner sheave wheel
26 Sheave wheel extension
28 Elongate base
30 Load module
32 Upper base section
34 Lower base section
36 Brace connector
38 Centre segment of inner sheave wheel
40 Chord plate
42 Block wheel bracket
44 Adjustable foot
46 Rail
48 Post
50 Wheel extension sector
52 Extension spoke
54 Side segment of inner sheave wheel
56 Side beam of lower base section
58 Cross brace of lower base section
60 Lift pockets
62 Block wheel

## Claims

1. A test rig for a subsea cable product (1), the test rig comprising:
- a sheave module (22) including a sheave (10) for holding a subsea cable product (1) that is to be tested;
- a load module (30) for applying tension to the subsea cable product (1) on the sheave (10) in order to perform a tensile bending test; and
- an elongate base (28) for placement between the sheave module (22) and the load module (30), the elongate base (28) being configured to act as a horizontal beam that can hold a compressive load generated by tension in the subsea cable product (1) during the tensile bending test; the test rig **characterised in that**
- the sheave (10) can be reversibly divided into parts for transportation in one or more container(s) of smaller cross-section than the diameter of the sheave (10); and
- **in that** the elongate base (28) can be reversibly divided into parts for transportation in one or more container(s) of smaller length than the whole length of the elongate base (28).

2. The test rig as claimed in claim 1, being configured to fully reversibly disassemble into parts each sized to fit into an intermodal shipping container.

3. The test rig as claimed in claim 1 or 2, wherein the divided parts of the sheave (10) and the elongate base (28) each fit into a cross-section defined by a rectangle of 2.3 m by 2.5 m or less.

4. The test rig as claimed in any preceding claim, wherein the sheave (10) comprises a wheel (24, 26) that can be disassembled into segments (38, 54) and/or sectors (50) in order to fit into the container(s) of smaller cross-section than the diameter of the sheave (10).

5. The test rig as claimed in any preceding claim, wherein the sheave (10) comprises an inner sheave wheel (24) of smaller diameter and a sheave wheel extension (26) that can combine with the inner sheave wheel (24) to provide a wheel of larger diameter.

6. The test rig as claimed in claim 5, wherein the inner sheave wheel (24) divides into segments (38, 54), whilst the sheave wheel extension (26) is formed by multiple wheel extension sectors (50), each wheel extension sector (50) having a partial circumference of the wheel of larger diameter.

7. The test rig as claimed in any preceding claim, wherein the elongate base (28) comprises an upper load bearing structure formed by a number of upper base sections (32) and a lower load bearing structure formed by a number of lower base sections (34).

8. The test rig as claimed in claim 7, wherein fixings between the upper base sections (32) and the lower base sections (34) are the same for each of the sections (32, 34) in order to allow the sections (32, 34) to be joined in any order as well as permitting a different number of sections (32, 34) to be included to vary the overall length of the assembled test rig by changing the length of the elongate base (28).

9. The test rig as claimed in any preceding claim, wherein the test rig is arranged so that, when it is in use, the location of the subsea cable product (1) is aligned with a shear centre of the elongate base (28) in order to ensure that the elongate base (28) is loaded in compression without any bending or twisting load.

10. The test rig as claimed in any preceding claim, wherein the elongate base (28) is structurally symmetrical in cross-section and the test rig is arranged so that, when it is in use, the location of the subsea cable product (1) is aligned with a halfway point on the height of the elongate base (28).

11. The test rig as claimed in any preceding claim, comprising a block (12) mounted on the load module (30) for pulling a winch cable (8) attached to the subsea cable product (1) that is being tested, wherein the block (12) comprises two block wheels (62) mounted spaced apart from one another so that the distance between the outer edges of the two block wheels (62) is larger than 2.5 m.

12. The test rig as claimed in any preceding claim, wherein the test rig as a whole has a maximum assembled length of more than 80 m.

13. The test rig as claimed in any preceding claim, wherein the compressive load bearing capacity of the elongate base (28) is 100 ton or more.

14. A kit of parts that, when assembled, will provide the test rig of any preceding claim.

15. A method of providing testing for subsea cable products (1), the method comprising: using a test rig as claimed in any of claims 1 to 13 to apply tension to a subsea cable product (1) during a test, wherein the method comprises one or both of:
- receiving the test rig as a kit of parts transported in intermodal containers, and assembling the test rig before performing the test; and/or
- after performing the test, disassembling the test rig and loading into intermodal shipping containers.

## Patentansprüche

1. Ein Prüfstand für ein Unterwasserkabelprodukt (1), der Prüfstand aufweisend:
- ein Seilrollenmodul (22) mit einer Seilrolle (10) zum Halten eines zu prüfenden Unterwasserkabelprodukts (1);
- ein Lastmodul (30) zum Aufbringen einer Spannung auf das Unterwasserkabelprodukt (1) auf der Seilrolle (10), um eine Zugbiegeprüfung durchzuführen; und
- eine längliche Basis (28) zum Anordnen zwischen dem Seilrollenmodul (22) und dem Lastmodul (30), wobei die längliche Basis (28) so konfiguriert ist, dass sie als horizontaler Träger wirkt, der eine durch die Spannung im Unterwasserkabelprodukt (1) während der Zugbiegeprüfung erzeugte Drucklast aufnehmen kann;
wobei die Prüfvorrichtung **dadurch gekennzeichnet ist, dass**
- die Seilrolle (10) reversibel in Teile zerlegt werden kann, um in einem oder mehreren Containern mit einem Querschnitt transportiert zu werden, der kleiner ist als der Durchmesser der Seilrolle (10); und
- die längliche Basis (28) reversibel in Teile zerlegt werden kann, um in einem oder mehreren Containern transportiert zu werden, deren Länge kleiner ist als die Gesamtlänge der länglichen Basis (28).

2. Der Prüfstand gemäß Anspruch 1, der so konfiguriert ist, dass er vollständig reversibel in Teile zerlegt werden kann, die jeweils so dimensioniert sind, dass sie in einen intermodalen Versandcontainer passen.

3. Der Prüfstand gemäß Anspruch 1 oder 2, wobei die geteilten Teile der Seilrolle (10) und der länglichen Basis (28) jeweils in einen Querschnitt passen, der durch ein Rechteck von 2,3 m mal 2,5 m oder weniger definiert ist.

4. Der Prüfstand gemäß einem der vorstehenden Ansprüche, wobei die Seilrolle (10) ein Rad (24, 26) umfasst, das in Segmente (38, 54) und/oder Sektoren (50) zerlegt werden kann, um in den/die Container mit einem Querschnitt zu passen, der kleiner ist als der Durchmesser der Seilrolle (10).

5. Der Prüfstand gemäß einem der vorstehenden Ansprüche, wobei die Seilrolle (10) ein inneres Seilrollenrad (24) mit kleinerem Durchmesser und eine Seilrollenradverlängerung (26) umfasst, die mit dem inneren Seilrollenrad (24) kombiniert werden kann, um ein Rad mit größerem Durchmesser zu bilden.

6. Der Prüfstand nach Anspruch 5, wobei das innere Seilrollenrad (24) in Segmente (38, 54) unterteilt ist, während die Seilrollenradverlängerung (26) aus mehreren Radverlängerungssektoren (50) gebildet ist, wobei jeder Radverlängerungssektor (50) einen Teilumfang des Rades mit größerem Durchmesser aufweist.

7. Der Prüfstand nach einem der vorstehenden Ansprüche, wobei die längliche Basis (28) eine obere Lasttragstruktur, die durch eine Anzahl von oberen Basisabschnitten (32) gebildet wird, und eine untere Lasttragstruktur, die durch eine Anzahl von unteren Basisabschnitten (34) gebildet wird, umfasst.

8. Der Prüfstand nach Anspruch 7, wobei die Befestigungen zwischen den oberen Basisteilen (32) und den unteren Basisteilen (34) für jedes der Teile (32, 34) gleich sind, damit die Teile (32, 34) in beliebiger Reihenfolge miteinander verbunden werden können und eine unterschiedliche Anzahl von Teilen (32, 34) verwendet werden kann, um die Gesamtlänge der zusammengebauten Prüfvorrichtung durch Ändern der Länge der länglichen Basis (28) zu variieren.

9. Der Prüfstand nach einem der vorstehenden Ansprüche, wobei der Prüfstand so angeordnet ist, dass bei seiner Verwendung die Position des Unterwasserkabelprodukts (1) mit einem Schubmittelpunkt der länglichen Basis (28) ausgerichtet ist, um sicherzustellen, dass die längliche Basis (28) ohne Biege- oder Torsionsbelastung auf Druck belastet wird.

10. Der Prüfstand nach einem der vorstehenden Ansprüche, wobei die längliche Basis (28) im Querschnitt strukturell symmetrisch ist und der Prüfstand so angeordnet ist, dass bei seiner Verwendung die Position des Unterwasserkabelprodukts (1) mit einem Mittelpunkt auf der Höhe der länglichen Basis (28) ausgerichtet ist.

11. Der Prüfstand nach einem der vorstehenden Ansprüche, umfassend einen Block (12), der auf dem Lastmodul (30) angebracht ist, um ein an dem zu prüfenden Unterwasserkabelprodukt (1) befestigtes Windenseil (8) zu ziehen, wobei der Block (12) zwei Blockräder (62) umfasst, die voneinander beabstandet angebracht sind, sodass der Abstand zwischen den Außenkanten der beiden Blockräder (62) größer als 2,5 m ist.

12. Der Prüfstand nach einem der vorstehenden Ansprüche, wobei der Prüfstand insgesamt eine maximale Baulänge von mehr als 80 m aufweist.

13. Der Prüfstand nach einem der vorstehenden Ansprüche, wobei die Druckbelastbarkeit der länglichen Basis (28) 100 Tonnen oder mehr beträgt.

14. Ein Bausatz aus Teilen, die, wenn sie zusammengebaut werden, den Prüfstand nach einem der vorstehenden Ansprüche ergeben.

15. Verfahren zum Prüfen von Unterwasserkabelprodukten (1), das Verfahren aufweisend: Verwenden eines Prüfstands gemäß einem der Ansprüche 1 bis 13, um während einer Prüfung Spannung auf ein Unterwasserkabelprodukt (1) auszuüben, wobei das Verfahren eines oder beide der folgenden Schritte umfasst:
- Empfangen des Prüfstands als Bausatz, der in intermodalen Containern transportiert wird, und Zusammenbauen des Prüfstands vor Durchführung des Tests; und/oder
- nach Durchführung der Prüfung Zerlegen des Prüfstands und Verladen in intermodale Versandcontainer.

## Revendications

1. Un banc d'essai pour un produit de cable sous-marin (1), le banc d'essai comprenant:
- un module de poulie (22) comprenant une poulie (10) pour maintenir un produit de cable sous-marin (1) devant être testé;
- un module de charge (30) pour appliquer une tension au produit de cable sous-marin (1) sur la poulie (10) afin d'effectuer un essai de flexion sous tension; et
- une base allongée (28) destinée à être placée entre le module de poulie (22) et le module de charge (30), la base allongée (28) étant configurée pour agir comme une poutre horizontale pouvant supporter une charge de compression générée par la tension dans le produit de cable sous-marin (1) pendant l'essai de flexion sous tension;
le banc d'essai étant **caractérisé en ce que**
- la poulie (10) peut être divisée de manière réversible en parties pour le transport dans un ou plusieurs conteneur(s) de section transversale plus petite que le diamètre de la poulie (10);
et **en ce que** la base allongée (28) peut être divisée de manière réversible en parties pour le transport dans un ou plusieurs conteneur(s) de longueur plus petite que la longueur totale de la base allongée (28).

2. Le banc d'essai selon la revendication 1, étant configuré pour se démonter de manière entièrement réversible en parties dont chacune est dimensionnée pour tenir dans un conteneur d'expédition intermodal.

3. Le banc d'essai selon la revendication 1 ou 2, dans lequel les parties divisées de la poulie (10) et de la base allongée (28) tiennent chacune dans une section transversale définie par un rectangle de 2,3 m par 2,5 m ou moins.

4. Le banc d'essai selon l'une quelconque des revendications précédentes, dans lequel la poulie (10) comprend une roue (24, 26) qui peut être démontée en segments (38, 54) et/ou en secteurs (50) afin de tenir dans le(s) conteneur(s) de section transversale plus petite que le diamètre de la poulie (10).

5. Le banc d'essai selon l'une quelconque des revendications précédentes, dans lequel la poulie (10) comprend une roue de poulie intérieure (24) de plus petit diamètre et une extension de roue de poulie (26) qui peut se combiner avec la roue de poulie intérieure (24) pour fournir une roue de plus grand diamètre.

6. Le banc d'essai selon la revendication 5, dans lequel la roue de poulie intérieure (24) se divise en segments (38, 54), tandis que l'extension de roue de poulie (26) est formée par plusieurs secteurs d'extension de roue (50), chaque secteur d'extension de roue (50) ayant une circonférence partielle de la roue de plus grand diamètre.

7. Le banc d'essai selon l'une quelconque des revendications précédentes, dans lequel la base allongée (28) comprend une structure porteuse supérieure formée par un certain nombre de sections de base supérieures (32) et une structure porteuse inférieure formée par un certain nombre de sections de base inférieures (34).

8. Le banc d'essai selon la revendication 7, dans lequel les fixations entre les sections de base supérieures (32) et les sections de base inférieures (34) sont les mêmes pour chacune des sections (32, 34) afin de permettre aux sections (32, 34) d'être assemblées dans n'importe quel ordre ainsi que de permettre l'inclusion d'un nombre différent de sections (32, 34) pour faire varier la longueur totale du banc d'essai assemblé en modifiant la longueur de la base allongée (28).

9. Le banc d'essai selon l'une quelconque des revendications précédentes, dans lequel le banc d'essai est agencé de sorte que, lorsqu'il est en cours d'utilisation, l'emplacement du produit de cable sous-marin (1) est aligné avec un centre de cisaillement de la base allongée (28) afin de garantir que la base allongée (28) est chargée en compression sans aucune charge de flexion ou de torsion.

10. Le banc d'essai selon l'une quelconque des revendications précédentes, dans lequel la base allongée (28) est structurellement symétrique en section transversale et le banc d'essai est agencé de sorte que, lorsqu'il est en cours d'utilisation, l'emplacement du produit de cable sous-marin (1) est aligné avec un point médian sur la hauteur de la base allongée (28).

11. Le banc d'essai selon l'une quelconque des revendications précédentes, comprenant un bloc (12) monté sur le module de charge (30) pour tirer un câble de treuil (8) attaché au produit de cable sous-marin (1) en cours de test, dans lequel le bloc (12) comprend deux roues de bloc (62) montées espacées l'une de l'autre de sorte que la distance entre les bords extérieurs des deux roues de bloc (62) est supérieure à 2,5 m.

12. Le banc d'essai selon l'une quelconque des revendications précédentes, dans lequel le banc d'essai dans son ensemble a une longueur maximale assemblée de plus de 80 m.

13. Le banc d'essai selon l'une quelconque des revendications précédentes, dans lequel la capacité de charge en compression de la base allongée (28) est de 100 tonnes ou plus.

14. Un kit de pièces qui, une fois assemblé, fournira le banc d'essai selon l'une quelconque des revendications précédentes.

15. Un procédé pour fournir des essais pour des produits de câble sous-marin (1), le procédé comprenant: utiliser un banc d'essai selon l'une quelconque des revendications 1 à 13 pour appliquer une tension à un produit de cable sous-marin (1) pendant un essai, dans lequel le procédé comprend l'un ou les deux éléments suivants:
- réceptionner du banc d'essai sous forme de kit de pièces transporté dans des conteneurs intermodaux, et assembler le banc d'essai avant d'effectuer l'essai; et/ou
- après avoir effectué l'essai, démonter le banc d'essai et le charger dans des conteneurs d'expédition intermodaux.
